(19) Europäisches Patentamt
European Patent Office
Office européen des brevets

(11) Veröffentlichungsnummer: **0 029 169**
**B1**

(12) # EUROPÄISCHE PATENTSCHRIFT

(45) Veröffentlichungstag der Patentschrift: **18.05.83**

(51) Int. Cl.³: **C 08 F 26/02**

(21) Anmeldenummer: **80106795.0**

(22) Anmeldetag: **05.11.80**

(54) **Polymere und Verfahren zu ihrer Herstellung.**

(30) Priorität: **17.11.79 DE 2946550**

(43) Veröffentlichungstag der Anmeldung: **27.05.81 Patentblatt 81/21**

(45) Bekanntmachung des Hinweises auf die Patenterteilung: **18.05.83 Patentblatt 83/20**

(84) Benannte Vertragsstaaten: **BE CH DE FR GB LI**

(56) Entgegenhaltungen:
**DE-A-1 814 597**
**DE-B-1 570 811**
**FR-A-1 248 730**

(73) Patentinhaber: **AGFA-GEVAERT Aktiengesellschaft, D-5090 Leverkusen 1 (DE)**

(72) Erfinder: **Bergthaller, Peter, Dr., Wolfskaul 1, D-5000 Koeln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 029 169 B1**

# Polymere und Verfahren zu ihrer Herstellung

Die Erfindung bezieht sich auf ein Verfahren zur Polymerisation von Allylammoniumsalze enthaltenden Monomergemischen sowie auf neue Polymere.

Copolymere mit insbesondere primären oder sekundären Ammoniumsalzmonomereinheiten bzw. den bei höherem pH-Wert daraus hervorgehenden primäre oder sekundäre Aminogruppen enthaltenden Monomereinheiten sind für verschiedene Verwendungszwecke interessant. Sie sind z.B. für Verwendungen interessant, bei denen die primäre oder sekundäre Aminogruppe als nukleophiles und daher alkylierbares oder acylierbares Zentrum in einem Polymergerüst benötigt wird, z.B. für die Einführung von funktionstragenden Gruppen oder für die Einführung von Vernetzungsbrücken durch Reaktion mit bifunktionellen oder polyfunktionellen Alkylierungs- oder Acylierungsmitteln oder durch polymeranaloge Carbonamidbildung mit Carboxylgruppen desselben oder eines weiteren Makromoleküls. So können z.B. durch Vernetzung in verdünnter Phase oder unter speziellen Bedingungen vor allem intracatenar vernetzte und damit lösliche Copolymere erhalten werden, während eine Vernetzungsreaktion in konzentrierteren Systemen unlösliche Netzwerke ergibt, die eine hohe mechanische und chemische Beständigkeit der daraus aufgebauten Polymerschichten bedingen.

Weiterhin sind aminogruppenhaltige Polymere für Verwendungswecke interessant, bei denen die Aminogruppen in Abhängigkeit vom pH-Wert des umgebenden Mediums als Ladungsträger in Erscheinung treten, etwa in kationischen Beizmitteln für die zeitweise Festlegung anionischer Verbindungen in Polymerschichten, z.B. für die pH-abängige Anfärbung von Bindemitteln in photographischen Schichten.

Schliesslich sind Polymere mit primären oder sekundären Aminogruppen für alle diejenige Zwecke interessant, bei denen Aminogruppen als komplexbildende schwermetallaffine Liganden in einem Polymermolekül benötigt werden, z.B. für die Verwendung als Schutzkolloid für Edel- oder Übergangsmetalle in Solform, für die Verbesserung der Haftung von Polymerüberzügen auf Metalloberflächen oder zur Bildung eines zusammenhängenden Metallfilms bei der stromlosen Plattierung von Oberflächen.

Besonders deutlich wirkt sich die Einführung von primären oder sekundären Aminogruppen in ein Copolymergerüst auf die Schutzkolloideigenschaften gegenüber schwerlöslichen Übergangs- oder Edelmetallverbindungen mit Halbleitercharakter aus. Diese können durch Fällung in Gegenwart von aminogruppenhaltigen Polymeren in Form von besonders agglomerationsbeständigen Dispersionen erhalten werden.

Allylamin und die substituierten Allylamine gehören bekanntlich zu den besonders träge polymerisierenden Monomeren. Auch in Form der Salze von starken Säuren polymerisieren sie nur langsam und unvollständig.

Besonder Probleme treten bei der Copolymerisation von Allylammoniumsalzen mit an sich leicht copolymerisierbaren Monomeren oder Monomergemischen auf. Schon bei Zugabe geringer Anteile an Allylammoniumsalzen wird der Ablauf der Copolymerisation stark verzögert, Polymerisationsgrad und Polymerausbeute sinken stark ab. Vom angebotenen Allylammoniumsalz wird wegen der ungünstigen Lage der Copolymerisationsparameter gewöhnlich weniger als ein Zehntel tatsächlich eingebaut [siehe J. Polymer Sci: Polymer Chemistry Ed. Vol. 16, 305 - 308 (1978)].

Der Versuch, die Einbaurate an Allylammoniumeinheiten durch Erhöhung des Monomerangebotes zu erhöhen, führt nur zu einem weiteren Rückgang der Polymerisationsgeschwindigkeit und erhöht die Aufarbeitungsprobleme.

Bisher ist kein Verfahren bekannt geworden, mit dem bei Gegenwart von Allylammoniumsalzen eine rasch und unter vollständigem Einbau des Allylammoniumsalzes ablaufende Polymerisationen erzielt werden kann. Auf die Verwendung von Allylammoniumsalzen in der Polymerchemie hat sich dieser Umstand ausserordentlich hinderlich ausgewirkt.

Ein Verfahren zur Herstellung von amphoteren Copolymeren mit bestimmten Allylammoniumsalzeinheiten als kationischem Bestanteil ist aus der US-PS 2 949 442 bekannt geworden. Wie aus den Angaben der Anmeldung zu entnehmen ist, weist dieses Verfahren alle oben beschriebenen Nachteile auf; es ist langwierig, technisch aufwendig und befriedigt in bezug auf den Einbau des Allylammoniumsalzes nicht.

Eine Aufgabe der Erfindung ist es, ein Verfahren zur Polymerisation von Allylammoniusalzen anzugeben.

Insbesondere ist es Aufgabe der Erfindung, ein Verfahren anzugeben, nach dem Allylammoniumsalze auf technisch einfache Weise mit schnell und vollständig polymerisierenden Monomeren, insbesondere mit solchen vom Acryltyp, schnell, in hoher Ausbeute und unter vollständigem Einbau des angebotenen Allylammoniumsalzes copolymerisiert werden können. Darüber hinaus soll das Verfahren möglichst einheitliche Polymerisate ergeben.

Aufgabe der Erfindung ist es weiterhin, ein Verfahren anzugeben, nach dem lösungsmittelfreie, Allylammoniumsalzeinheiten in copolymerisierter Form enthaltende wasserlösliche Copolymere erhalten werden können, die sich als Schutzkolloide für Edelmetall- oder Edelmetallsalzdispersionen eignen.

Aufgabe der Erfindung ist es weiterhin, ein Verfahren anzugeben, nach dem weitgehend monomerfreie Lösungen von Copolymeren erhalten werden, die polymerisierte Einheiten von Allylammoniumsalzen enthalten.

Aufgabe der Erfindung ist es schliesslich, neue Polymere aufzufinden.

Es wurde nun gefunden:

1. Verfahren zur Polymerisation von Allylammoniumsalzen, dadurch gekennzeichnet, dass man eine Verbindung der Formel (I)

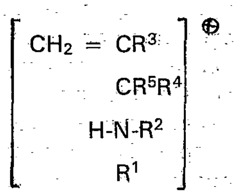 A (I)

worin bedeuten:

$R^1$, $R^2$ gleich oder verschieden: Wasserstoff; aliphatischer, araliphatischer oder cycloaliphatischer Rest mit vorzugsweise 1 bis 20 C-Atomen, der gegebenenfalls mit einem in der Polymerchemie üblichen Substituenten substituiert sein kann, insbesondere durch eine der folgenden Gruppen: OH, Alkoxy mit 1 - 12 C-Atomen, Aryloxygruppen mit 6 - 10 C-Atomen, Acyloxygruppen mit 1 - 12 C-Atomen, Acylaminogruppen mit 1 - 12 C-Atomen, Alkyl- oder Arylureidogruppen mit 1 - 12 C-Atomen, COOH, $CONH_2$, COO-Alkyl (mit 1 - 12 C-Atomen), CN, Cl,

Br, $SO_3^{\ominus}$, 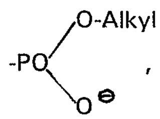 ,

oder

$R^1$ und $R^2$ zusammen Ringglieder zur Ergänzung eines 5-7gliedrigen Heterocyclus, insbesondere eines gegebenenfalls substituierten Pyrrolidons, Piperidins, Perhydroazepins, Morpholins oder Thiomorpholins.

$R^3$, $R^4$, $R^5$ gleich oder verschieden: H; gegebenenfalls üblich substituierte Alkylgruppe, insbesondere $C_1$-$C_4$, speziell Methyl; insbesondere H,

A Anion, bevorzugt ein- oder zweiwertig, insbesondere das Anion einer starken anorganischen oder organischen Säure, insbesondere $Cl^{\ominus}$, Alkansulfonat, Arylsulfonat, Trifluoracetat, Perfluoralkanoat, Perfluoralkansulfonat oder die Sulfonatgruppe eines in copolymerisierter bzw. copolymerisierbarer Form vorliegenden Monomeren

und/oder

$R_3$ $[-CR^5R^4-NH^1R^2H]^+$ A

in Gegenwart einer Phosphorverbindung der Formel

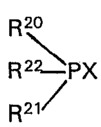 (II)

worin bedeuten:

$R^{20}$, $R^{21}$ gleich oder verschieden: H; Alkyl, insbesondere mit 1 - 12, vorzugsweise mit 1 - 4 C-Atomen; Aryl, insbesondere Phenyl; Hydroxygruppe; Alkoxy, insbesondere mit 1 bis 12 C-Atomen; Aralkyl, insbesondere Benzyl; eine Aralkoxygruppe, insbesondere eine Benzyloxygruppe; oder $R^{20}$ und $R^{21}$ gemeinsam eine Gruppe $-O-R^{23}-O-$, worin $R^{23}$ ein gegebenenfalls substituierter Alkylenrest mit nicht mehr als 6 C-Atomen ist; Dialkylaminogruppe, wobei Alkyl insbesondere $C_1$-$C_4$ bedeutet; Cl

$R^{22}$ H; gegebenenfalls substituiertes Acyl, insbesondere von einer aliphatischen Carbonsäure mit 1 bis 20 C-Atomen oder von einer aromatischen Carbonsäure, speziell Acetyl, Pivaloyl, Butyryl, Benzoyl; Alkyl, insbesondere mit 1-12 C-Atomen, eine Dialkylaminogruppe, wobei Alkyl insbesondere $C_1$-$C_4$ ist,

X einsames Elektronenpaar oder ein Sauerstoffatom, wobei X ein Elektronenpaar ist, wenn keiner der Reste $R^{20}$-$R^{22}$ = H ist

polymerisiert.

Die aus der DE-OS 1 814 597 bekannten Mischpolymere sind von den erfindungsgemässen sowohl strukturell als auch hinsichtlich ihrer Herstellung und ihrer Eigenschaften unterschieden.

Die Polymerisation wird vorzugsweise zwischen 60-90 °C, speziell oberhalb von 70 °C, durchgeführt.

In einer besonders bevorzugten Ausführungsform liegen in der Verbindung gemäss Formel (I) folgende Bedeutungen vor:

$R^1$, $R^2$ Wasserstoff;
$R^4$, $R^5$ Wasserstoff;
A Cl
$R^3$ $-CH_2\overset{\oplus}{N}H_2R^1$ $Cl^{\ominus}$; $CH_3$; H.

Besonders bevorzugte Verbindungen der Formel (I) sind:

Allylaminhydrochlorid, Allylammoniummethansulfonat, Allylammoniumtrifluoracetat, Allylammoniumbenzolsulfonat, 3-Allylammoniopropansulfonat, 4-Allylammoniobutansulfonat, das Allylammoniumsalz der 2-Acrylamido-2-methylpropansulfonsäure, das Allylammoniumsalze der Methacryloxyethansulfonsäure, Allylammonium-methylphosphonat; N-Ethylallylammonium-ethylsulfat, N-Cyanethylallylammoniumchlorid, N-Hydroxyethylallylammoniumchlorid, Methallylammoniumchlorid, 2-Methylen-1,3-bis-alkylammoniumpropandichloride.

In den Verbindungen der Formel (II) liegt der Phosphor bevorzugt in der Oxidationsstufe + 3 vor. Besonders bevorzugte Verbindungen der Formel (II) sind:

Phosphorige Säure, ihre Anhydride, Chloride, Esterchloride und ihre Mono- oder Diester; Trialkylphosphite. Weiterhin eignen sich Phosphonigsäuren und ihre Ester oder Esterchloride, schliesslich die Unterphosphorige Säure und die disubstituierten Phosphinoxide. Von allen genannten Säuren können schliesslich auch die Amide eingesetzt werden. Besonders genannt seien:

Diethylphosphit, Ethylenphosphit [2-Oxo-(2H)--1,3,2-dioxaphosphonit), Dibutylphosphit, Phenylphosphonigsäure, Phenylphosphonigsäurebutylester, $PCl_3$, Hexamethylphosphonigsäure-Triamid, Phosphorigsäuretrimorpholid.

Als verkappte Dialkylphosphite, die erst mit Alkoholen in einem wasserfreien säurehaltigen Medium in Dialkylphosphite übergehen und dann wirksame Coinitiatoren darstellen, sind schliesslich die Acylphosphonsäuredialkylester zu nennen (Kabachnik, Rossijskaja; Izv. Akad. Nauk. SSSR 1965, 597), z.B. der Methacryloylphosphonsäurediethylester des als Polymerisationsmedium verwendeten Alkohols, ins Polymer eingebaut wird.

Insbesondere wurde gefunden:

2. Ein Verfahren zur Copolymerisation von Verbindungen der Formel (I) mit wenigstens einem anderen Comonomeren vom Acryltyp in Anwesenheit einer Verbindung der Formel (II).

Weiterhin wurden gefunden:

3. Neue Polyymere, enthaltend wiederkehrende Einheiten der Formel III:

$$\begin{array}{l} \quad CR^4R^5\text{-}NR^1R^2 \\ \quad\ \ | \\ -CH_2\text{-}C\text{-} \\ \quad\ \ | \\ \quad CR^4R^5\text{-}NR^1R^2 \end{array} \qquad (III)$$

die gegebenenfalls in Salzform vorliegen können.

Polymere gemäss Formel III können erhalten werden durch Polymerisation von Verbindungen der Formel I, wobei $R^3$ die Gruppe $(-CR^4R^5-NR^1R^2H)^+A$ bedeutet, in Gegenwart einer Verbindung gemäss Formel II.

Erfindungsgemäss hergestellte Polymere können je nach pH-Wert als Ammoniumsalze oder als Amine vorliegen.

Das zu polymerisierende Monomerengemisch kann grundsätzlich beliebig zusammengesetzt sein. Bevorzugt enthält es zusätzlich zu den Verbindungen der Formel (I) Comonomere vom Acryltyp und gegebenenfalls Comonomere mit Elektronendonorgruppen im Molekül. Der Anteil der zuletzt genannten Comonomeren beträgt vorzugsweise weniger als 20% bezogen auf das Acrylmonomer und weniger als 10% bezogen auf alle Monomeren. Weiterhin können neutrale Monomere wie Styrol copolymerisiert werden.

Von den Comonomeren des Acryltyps seien insbesondere folgende genannt:

Acrylamid, Acrylsäure-t-butylamid, N-Cyclohexylacrylamid, Methylacrylat, Ethylacrylat, Butylacrylat, 2-Hydroxyethylacrylat, 2-Hydroxypropylacrylat, Acrylnitril, Acrylsäure, dimere Acrylsäure (3-Acryloyloxypropansäure), 2-Acrylamido-2-methylpropansulfonsäure; Methacrylsäure, 2-Hydroxyethylmethacrylat, Methylmethacrylat, Methacrylnitril, Sulfoethylmethacrylat, Itaconsäure, Itaconsäuredimethylester, Itaconsäuremonobutylester, Itaconsäuremethoxyethylester, Itaconsäuremono-n-hexylamid, N-Sulfoethylitaconsäuremonoamid, Maleinsäure, Maleinsäureanhydrid, Itaconsäureanhydrid, Maleinsäurediethylester, Fumarsäurediethylester. Besonders bevorzugt sind Acrylamid und Acrylsäure.

Von den Comonomeren mit Elektronendonorgruppen seine folgende genannt:

N-Vinyl-N-alkylamide, N-Vinyllactame, N-Vinyloxazolidinone, N-Vinylimidazole, N-Allylimidazole, N-Methallylimidazole, Vinylsulfide, Vinylether, 1-Acyloxy-2-acyloxymethylpropene-2, Vinylcarboxylate, Allylether und die Allylether von aliphatischen Carbonsäuren.

Der Anteil an Monomeren von Allylammonium-Salztyp der Formel I bezogen auf alle Monomeren beträgt bei der Copolymerisation vorzugsweise maximal 70 Mol.-%.

Technisch besonders interessante Copolymere enthalten 5-30 Mol.-% Allylammoniumsalzeinheiten in copolymerisierter Form, wobei der Rest aus copolymerisierten Monomeren des Acryltyps besteht.

Die Polymerisation erfolgt nach grundsätzlich bekannten Verfahren in Gegenwart von Polymerisationsinitiatoren. In diesem Zusammenhang ist zu verweisen auf Ian M.G. Cowie «Chemie und Physik der Polymeren», Seite 52, Verlag Chemie, Weinheim 1976; weiterhin auf das Kapitel IId, «Erniedrigung des Molekulargewichts durch Regler» in Houben-Weyl, Methoden der Organischen Chemie, Band XIV/1, Seite 318-327.

Typische, für die Zwecke der Erfindung geeignete Initiatoren sind: Azoisobutronitril, 2,2'-Azobis-(2,4-dimethylvaleronitril), symmetrische Azo-bismercaptoverbindungen gemäss der deutschen Offenlegungsschrift 2 518 622, Di-tert.-butylperoxid, tert.-Butylcumylperoxid, Dicumylperoxid, 4,4,-Di-tert.-butylperoxyvaleriansäure-n-butylester, tert.-Butylperacetat, tert.-Butylperpivalat, tert.-Butylperbenzoat, tert.-Butylperoxiisopropylcarbonat, tert.-Butylperoxi-2-ethylhexanoat, Diisopropylperoxidicarbonat, Dipropionylperoxid, Dioctanoylperoxid, Dilauroylperoxid, Dibenzoylperoxid, Dicyclohexylperoxidicarbonat, Kaliumpersulfat, Wasserstoffperoxid, Peressigsäure, Monoperphthalsäure. Die Art des verwendeten Initiators ist im wesentlichen von den gewählten Polymerisationsbedingungen und der Natur der verwendeten Monomeren abhängig.

Verwiesen wird in diesem Zusammenhang auf Houben-Weyl, Methoden der Organischen Chemie, 4. Auflage, 1961, Band XIV/1, Seite 209 ff.

Der optimale Initiator kann durch Vergleichsversuche ermittelt werden.

Als Lösungsmittel können wässrige oder nichtwässrige Systeme verwendet werden, das Polymerisationsmedium muss nicht homogen sein. Bevorzugt werden Lösungsmittel, die alle Monomeren lösen. Der Zusatz von regelnden Lösungsmitteln wie Isopropanol ist manchmal günstig, kann sich jedoch in einem Absinken der Ausbeute und des mittleren Molekulargewichtes auswirken.

Als Lösungsmittel für die Durchführung der Polymerisation eignen sich unter den in der Polymerisationstechnik üblichen Lösungsmitteln vor allem jene mit relativ niedrigen Kettenübertragungskonstanten, z.B. Wasser, tert.-Butanol, 2-Methoxyethanol, Acetonitril, Ethylacetat, 1,2-Dimethoxyethan, Dioxan, 2-Methoxyethanol, Benzol, Chlorbenzol, o-Dichlorbenzol. Besonders günstig sind Gemische von t-Butanol mit Chlorbenzol im Mischungsbereich 1:10 bis 10.

Das mittlere Molgewicht der nach dem erfindungsgemässen Verfahren hergestellten Polymeren liegt vorzugsweise im Bereich von 20000 bis 400000, doch können je nach den gewählten Bedingungen auch höhere oder tiefere Molgewichtsbereiche erzielt werden. Im allgemeinen hängt die Lage des mittleren Molgewichts von der Menge an Initiator und vom Anteil an Phosphorverbindung ab. Als besonders günstig sind Mengenanteile von 0,2-5 Mol.-% Phosphorverbindung und 0,05-2 Mol.-% Initiator, bezogen auf Monomer, anzusehen. Die Phosphorverbindung wird im allgemeinen 1-10fachem molaren Überschuss, bezogen auf den Initiator, eingesetzt.

Es hat sich als zweckmässig erwiesen, den Initiator entweder gemeinsam mit der Phosphorverbindung und getrennt von den Monomeren während der Polymerisation zuzudosieren oder den Initiator mit einem Teil des Lösungsmittels vorzulegen und die Phosphorverbindung gemeinsam mit den Monomeren zuzudosieren.

Die Polymerisation wird vorzugsweise als Fällungspolymerisation, d.h. in einem das Polymer nicht lösenden Lösungsmittel durchgeführt und liefert die Polymeren in Form farbloser, gut filtrierbarer und gut zu trocknender Pulver; sie kann aber auch nach anderen Techniken, z.B. als Lösungspolymerisation durchgeführt werden, wobei der hohe Umsetzungsgrad, der beim Verfahren gemäss der Erfindung erzielt wird, und vor allem der vollständig erzielte Einbau der Allylammoniumsalze die Verwendung der Polymerlösungen ohne weitere Reinigung ermöglichen.

Die erhaltenen Polymeren zeigen je nach Art und Mengenanteil der einzelnen Monomeren unterschiedliche Eigenschaften, die sie für die verschiedensten Verwendungszwecke geeignet machen.

So eignen sich wasserlösliche und gut hydrophile Copolymere mit sehr hohem Acrylamidanteil (bis 80%) und niedrigem oder fehlendem Anteil an hydrophoben Monomeren, z.B. Butylacrylat, 2-Ethylhexylacrylat, als Schutzkolloide für die Stabilisierung von wässrigen Dispersionen hydrophober Bestandteile.

Im folgenden wird beispielhaft die Herstellung einiger Polymeren beschrieben.

*Copolymere*

*Copolymer 1*

Zu einer Lösung von 0,2 ml tert.-Butylperoctoat in 90 ml t-Butanol und 10 ml Chlorbenzol tropft man über 60 Min. bei Rückflusstemperatur (83°C) unter Rühren in Stickstoffatmosphäre die Lösung von

35,5 g Acrylamid,
56,8 g Allylammoniumchlorid und
0,28 g Diethylphosphit in
400 ml tert.-Butanol und 400 ml Chlorbenzol.

Anschliessend gibt man 0,1 ml tert.-Butylperoctoat nach und hält noch 5 Stunden unter Rückfluss. Man lässt erkalten, saugt ab, wäscht mit Isopropanol nach und trocknet bei 60°C m Vakuum. Ausbeute 67 g (81% der Theorie).

Analyse:
$Cl_{berechnet}$: 21,6%
$Cl_{gefunden}$: 20,6%

*Copolymer 2*

Monomerlösung:
42,6 g (0,6 Mol) Acrylamid
12,8 g (0,1 Mol) Butylacrylat
10,8 g (0,15 Mol) Acrylsäure, stabilisiert mit 0,1% Butylhydrochinon
14,0 g (0,15 Mol) Allylammoniumchlorid
0,28 g Diethylphosphit in
400 ml t-Butanol und
40 ml Chlorbenzol.

Man verfährt wie in Beispiel 1 beschrieben.
Ausbeute: 71 g (88% der Theorie).
Analyse:
$Cl_{berechnet}$: 6,63%
$Cl_{gefunden}$: 6,0%

*Copolymer 3*

Monomerlösung:
39 g Acrylamid (0,55 Mol)
12,8 g Butylacrylat (0,1 Mol)
17,2 g Methacrylsäure (0,2 Mol; frisch über Cuacetat destilliert)
14,0 g Allylammoniumchlorid
1,5 g Diethylphosphit
400 ml t-Butanol
40 ml Chlorbenzol.

Man verfährt wie in Beispiel 1 beschrieben.
Ausbeute: 70 g (84% der Theorie).
Analyse:
$Cl_{berechnet}$: 6,47%
$Cl_{gefunden}$: 5,5%

*Copolymer 4*

Monomerlösung:
39 g Acrylamid (0,55 Mol)
12,8 g Butylacrylat (0,1 Mol)
17,2 g Methacrylsäure (0,2 Mol)
14,0 g Allylammoniumchlorid (0,15 Mol)
400 ml t-Butanol
40 ml Chlorbenzol.

Man gibt die Monomerlösung über 1 Stunde in 10 Portionen unter Rückfluss zu einer intensiv in $N_2$-Atmosphäre gerührten Lösung von 0,1 ml tert.-Butylperoctoat in 100 ml t-Butanol und 10 ml Chlorbenzol und hält noch eine weitere Stunde unter Rückfluss. Es scheiden sich nur wenige Flocken eines schmierigen Polymeren ab.

Anschliessend gibt man 0,3 ml Diethylphosphit zu. Nach 5 Min. hat sich der Kolbeninhalt in einen weissen Brei verwandelt. Man gibt 0,1 ml t-Butylperoctoat nach, hält noch 6 Stunden unter Rückfluss und saugt nach dem Erkalten ab. Aufarbeitung wie in Beispiel 1.

Ausbeute: 67 g (81% der Theorie).
Analyse:
$Cl_{berechnet}$: 6,4%
$Cl_{gefunden}$: 6,6%
P: unter 0,1% (nicht nachgewiesen).

Beispiel 4 zeigt, dass die Polymerisation erst nach Zugabe der Phosphorverbindung ingang kommt und dass erst die zugesetzte Phosphorverbindung zur Bildung eines brauchbaren Polymeren führt.

*Copolymer 5*

Man verfährt wie in Beispiel 3, jedoch mit dem Unterschied, dass als Phosphorverbindung 5 g (3 Mol.-%, bezogen auf Monomer) Phenylphosphonigsäure eingesetzt werden.

Ausbeute: 71 g (85% der Theorie).

*Copoloymer 6*

Monomerlösung:
28,4 g (0,4 Mol) Acrylamid
25,6 g (0,2 Mol) Butylacrylat
41,4 g (0,2 Mol) 2-Acrylamido-2-methylpropan-sulfonsäure
11,4 g (0,2 Mol) Allylamin
0,5 ml 60%ige $H_3PO_2$
500 ml t-Butanol

Man verfährt wie in Beispiel 1 beschrieben.
Ausbeute: 80 g (75% der Theorie).

Analyse:
$S_{berechnet}$: 5,99%
$S_{gefunden}$:6,45%
Das Polymer ist in Wasser löslich (pH = 5).
Aus der eingeengten Mutterlauge des Copolymeren lassen sich mit Toluol weitere 11 g eines Copolymeren fällen, das in Wasser-Methanol 1:1 klar löslich ist (Butylatreichere Anteile).

*Copolymer 7*
Monomerlösung:
76,8 g (0,6 Mol) Butylacrylat
41,4 g (0,2 Mol) 2-Acrylamido-2-methylpropansulfonsäure
11,4 g (0,2 Mol) Allylamin
0,4 ml Dimethylphosphit
500 ml t-Butanol.
Man verfährt wie in Beispiel 1 beschrieben, das Polymer bleibt aber in Lösung und kann nach Eindampfen im Vakuum als wasserlöslicher Sirup gewonnen werden.
Ausbeute: (nach Rückstandsbestimmung) 119 g (92% der Theorie).
Beim Abdampfen einer wässrigen Polymerlösung (5%ig) mit 10 Gew.-% KOH wird kein Geruch nach Allylamin festgestellt.

*Copolymer 8*
Monomerlösung:
49,7 g (0,7 Mol) Acrylamid
18,4 g (0,1 Mol) 2-Ethylhexylacrylat
13 g (0,1 Mol) Itaconsäure
11,4 g (0,1 Mol) Allylamin - HCl
0,3 ml Diethylphosphit
500 ml t-Butanol.
Man verfährt wie in Beispiel 1, Polymerisationsdauer 7 Stunden bei 83°C;
Ausbeute: 90 g (97% der Theorie).

*Copolymer 9*
Monomerlösung:
25,5 g (0,5 Mol) Acrylamid
30 g (0,3 Mol) Methylmethacrylat
7,2 g (0,1 Mol) Acrylsäure
5,7 g (0,1 Mol) Allylamin
17,2 g (0,1 Mol) wasserfreie p-Toluolsulfonsäure
0,4 g Phenylphosphonigsäure
350 ml t-Butanol, 150 ml Chlorbenzol.
Man verfährt wie in Beispiel 1, Polymerisationsdauer 8 Stunden.
Ausbeute: 74,5 g (78% der Theorie).
Analyse:
$S_{berechnet}$: 3,35%
$S_{gefunden}$: 4%

*Copolymer 10*
Monomerlösung:
60 g Ethylacrylat (0,6 Mol)
14,4 g Acrylsäure (0,2 Mol)
22,8 Allylamin - HCl (0,2 Mol)
300 ml tert.-Butanol
Initiatorlösung:
0,3 ml t-Butylperpivalat
0,5 ml Phenylphosphinsäure-n-butylester
100 ml t-Butanol
Vorlage:
0,1 ml t-Butylperoctoat in
100 ml t-Butanol.
Die Vorlage wird unter $N_2$-Atmosphäre zum Rückfluss aufgeheizt. Unter Rühren und Rückfluss dosiert man über 4 Stunden stündlich je 1/4 der Monomerlösung und der Initiatorlösung ein. Man hält noch 4 Stunden unter Rückfluss und destilliert anschliessend unter vermindertem Druck insgesamt 250 ml t-Butanol ab. Danach ist der Geruch nach Ethylacrylat verschwunden. Die viskose Lösung wird mit Methanol auf 1000 ml Gesamtvolumen aufgefüllt.
Ausbeute: (nach Rückstandsbestimmung) 90 g (93% der Theorie).

*Vergleichsversuch*

*Copolymere 11 - 13*

*Copolymer 11* (in Anlehnung an das Verfahren der US 2 949 442)
Monomerlösung:
10 g Allylamin . HCl
10 g Acrylamid
5 g Acrylsäure
50 mg Kaliummetabisulfit
50 ml abgekochtes und mit $N_2$ gespültes Wasser
Initiatorlösung:
200 mg Kaliumpersulfat in 50 ml abgekochtem Wasser.
Man tropft die Monomerlösung der auf 38°C gehaltenen Initiatorlösung über 60 Minuten unter $N_2$ zu, hält noch 6 Stunden auf 38-40°C und kocht auf. Anschliessend stellt man auf pH = 7 und rührt in Aceton (50 ml) ein. Nach dem Umfällen ist das Copolymer zum Grossteil unlöslich.

*Copolymer 12* (mit nicht peroxidischem Initiator)
Monomerlösung:
10 g Allylamin . HCl
10 g Acrylamid
5 g Acrylsäure
50 mg Diethylphosphit
100 ml tert.-Butanol + 100 ml Chlorbenzol.
Vorlage:
250 mg Azoisobutyronitril in
50 ml tert.-Butanol.
Man verfährt wie in Beispiel 1, jedoch mit dem Unterschied, dass während der 5stündigen Nachheizzeit insg. 250 mg Azoisobutyronitril in 50 ml t-Butanol nachgegeben werden.
Ausbeute: quantitativ.
Analyse:
$Cl_{berechnet}$: 15,2%
$Cl_{gefunden}$: 12,2%
Das Polymer ist ausgezeichnet wasserlöslich.

*Copolymer 13* (mit peroxidischem Initiator)
Monomerlösung:
wie bei Copolymer 12
Vorlage:
0,1 ml t-Butylperoctoat in
50 ml tert.Butanol.
Man verfährt wie in Beispiel 1 beschrieben, insgesamt werden 0,2 ml t-Butylperoctoat nachgegeben.
Ausbeute: 23 g.

Analyse:
$Cl_{berechnet}$: 15,2%
$Cl_{gefunden}$: 13,8%
Das Polymer ist ausgezeichnet wasserlöslich.

Der Vergleichsversuch mit den Copolymeren 11-13 zeigt deutlich, dass das Verfahren gemäss der Erfindung überlegene Ergebnisse liefert. Das nach dem Stand der Technik hergestellte Copolymer 11 erweist sich als vernetzungsanfällig und instabil.

*Copolymer 14*
Monomerlösung:
31,8 g (0,6 Mol) Acrylnitril
14,4 g (0,2 Mol) Acrylsäure
18,7 g (0,2 Mol) Allylamin . HCl
0,4 ml 60%ige $H_3PO_3$
200 ml t-Butanol
200 ml Chlorbenzol.
Man verfährt wie in Beispiel 1 beschrieben.
Ausbeute: 50 g (77% der Theorie).
Analyse:
$Cl_{berechnet}$: 10,9%
$Cl_{gefunden}$: 12,9%
Die Analyse zeigt, dass das Allylamin-HCl vorwiegend in die höhermolekularen Copolymeranteile eingebaut wurde.

*Copolymer 15*
Monomerlösung:
35,5 g (0,5 Mol) Acrylamid
25,6 g (0,2 Mol) Butylacrylat
10,8 g (0,15 Mol) Acrylsäure
14,0 g (0,15 Mol) Allylamin-HCl
0,3 ml Diethylphosphit
400 ml t-Butanol
40 ml Chlorbenzol.
Man verfährt wie in Beispiel 1 beschrieben.
Ausbeute: 60 g (70% der Theorie).
Analyse:
$Cl_{berechnet}$: 6,2%
$Cl_{gefunden}$: 6,0%.
Beim Eindampfen der Mutterlauge hinterbleibt eine Polymerfraktion (Ausbeute 20 g), die noch wasserlöslich ist, aber bei Zugabe von 10%iger NaCl-Lösung ausgesalzen wird.

*Copolymer 16*
1. Herstellung eines Rohethylierungsproduktes aus Allylamin: Zu 11,4 g (0,2 Mol) Allylamin in 100 ml Methanol tropft man bei 25°C 31 g (0,2 Mol) Diethylsulfat. Man hält 1 Stunde unter Rückfluss, dampft im Vakuum ein und nimmt in 400 ml t-Butanol auf.

2. Nach Zugabe von 42,6 g (0,6 Mol) Acrylamid und 14,4 g Acrylsäure (0,2 Mol) wird die Monomerlösung unter Rückfluss gleichzeitig mit einer Lösung von 1,5 ml Diethylphosphit und 0,4 ml t-Butanolperoctoat in 150 ml Chlorbenzol über 2 Stunden einer unter Rückfluss gerührten Vorlage von 150 ml t-Butanol zugetropft. Man heizt anschliessend 2 Stunden weiter, gibt 0,1 ml Diethylphosphit und 0,1 ml t-Butylperoctoat nach und hält weitere 4 Stunden unter Rückfluss. Man lässt auf 35°C abkühlen, saugt ab, wäscht 2 × mit je 200 ml Ethylacetat nach und trocknet im Vakuum bei 50°C.

Ausbeute: 84 g (85% der Theorie).

*Copolymer 17*
Monomerlösung:
49,7 g (0,7 Mol) Acrylamid
45,8 g (0,3 Mol) N-Allylglycinhydrochlorid
0,3 ml Diethylphosphit
500 ml t-Butanol
50 ml Chlorbenzol.
Man verfährt wie in Beispiel 1 beschrieben.
Ausbeute: 70 g (73% der Theorie).

*Copolymer 18*
1. Zur Lösung von 51 g Allylamin (0,9 Mol) in 100 ml Methanol tropft man unter Rückfluss 41 g (0,3 Mol) Butansulfon. Man rührt 12 Stunden unter Rückfluss nach und dampft das Methanol ab. Man nimmt das rohe Sulfobutylierungsprodukt mit 600 ml 2-Methoxyethanol und 60 ml Wasser auf.

2. Nach Zugabe von 28,4 g Acrylamid (0,4 Mol) und 38,4 g (0,3 Mol) Butylacrylat tropft man die Monomerlösung gleichzeitig mit der Lösung von 0,6 ml Dimethylphosphit und 0,4 ml t-Butylperoctoat in 100 ml Chlorbenzol in eine Vorlage von 200 ml 2-Methoxyethanol, die auf Rückfluss gehalten wird. Nach 3 Stunden gibt man je 0,2 ml t-Butylperoctoat und Dimethylphosphit nach. Nach 6 Stunden wird die Polymerisation abgebrochen, das Gemisch auf 45°C abgekühlt. Man saugt das Polymer ab, wäscht mit 200 ml Isopropanol und 200 ml Ethylacetat nach und trocknet im Vakuum bei 60°C.

Ausbeute: 79 g (63% der Theorie).

In der Mutterlauge verbleiben 40 g butanollösliches Polymer.

Analyse:
$S_{berechnet}$: 7,7%
$S_{gefunden}$: 9,5%

*Copolymer 19*
Copolymer aus
49,7 g (0,70 Mol) Acrylamid
12,8 g (0,10 Mol) Butylacrylat
7,2 g (0,10 Mol) Acrylsäure
15,6 g (0,10 Mol) Allyl-chlorethylammoniumchlorid, hergestellt aus 2-Hydroxyethylamin-HCl mit Thionylchlorid in Chloroform in Gegenwart von 2 Gew.-% Dimethylformamid.

Man verfährt wie in Beispiel 1 beschrieben.
Ausbeute: 70 g (82% der Theorie).
Analyse:
$Cl_{berechnet}$: 8,32%
$Cl_{gefunden}$: 7,0%

Eine wässrige Lösung des Copolymeren, die auf pH = 7 eingestellt ist, trocknet zu einem unlöslichen Film auf.

*Copolymer 20*
Copolymer aus
53,3 g (0,75 Mol) Acrylamid
7,2 g (0,1 Mol) Acrylsäure
14 g Allylaminhydrochlorid.
Man verfährt wie in Beispiel 1 beschrieben.
Ausbeute: 75 g (100% der Theorie).

Analyse:
$Cl_{berechnet}$: 7,17%
$Cl_{gefunden}$: 7,05%

*Copolymer 21*

Man verfährt wie in Beispiel 1 beschrieben, jedoch mit dem Unterschied, dass anstelle von 0,3 ml t-Butylperoctoat 0,4 ml 35%iges Wasserstoffperoxid als Initiator verwendet werden.

Ausbeute: 70 g (94% der Theorie).
Analyse:
$Cl_{berechnet}$: 7,15%
$Cl_{gefunden}$: 7,0%

*Copolymer 22*

Man verfährt wie in Beispiel 1, jedoch mit dem Unterschied, dass als Initiator 0,7 g Azobisisobutyronitril verwendet wird und dieser in Chlorbenzol gelöst wie folgt zugegeben wird: 0,2 ml vor der Monomerzugabe, je 0,1 ml stündlich während einer 6stündigen Nachheizperiode.

Ausbeute: 70 g (94% der Theorie).
Analyse:
$Cl_{berechnet}$: 7,15%
$Cl_{gefunden}$: 6,85%

*Copolymer 23*

a) *1,3-Bis-ethylamino-2-methylenpropan:*

Zu 1000 ml 40%iger Ethylaminlösung und 500 ml Methanol tropft man unter Rückfluss 125 g 2-Chlormethyl-3-chlorpropen. Man hält noch 2 Stunden unter Rückfluss, dampft bis auf ein Volumen von 500 ml ein, stellt mit 80 g NaOH alkalisch und gibt zur Vervollständigung der Phasentrennung 300 ml gesättigte $K_2CO_3$-Lösung zu. Man trennt die Ölphase ab, trocknet mit $K_2CO_3$ und fraktioniert im Vakuum. Ausbeute: 100 g (70% der Theorie) $Kp_{14mb}$ : 73-77°C.

b) Zur Herstellung des Hydrochlorids leitet man in eine auf 15° gekühlte Lösung von 14,2 g 1,3-Bis-ethylamino-2-methylenpropan in 100 ml t-Butanol HCl ein. Sobald die berechnete Menge aufgenommen ist, fällt man mit 300 ml Ethylacetat, kühlt auf 0°C ab und saugt ab. Ausbeute: 22 g folgender Verbindung:

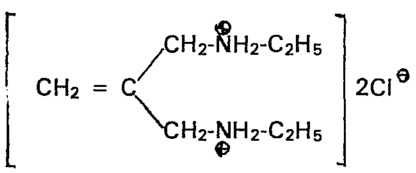

c) Zur Copolymerisation nimmt man 22 g (0,1 Mol) des Hydrochlorids, 20 g (0,1 Mol) Li-4-sulfobutylacrylat und 57 g (0,8 Mol) Acrylamid in 500 ml 2-Methoxyethanol auf. Die Monomerlösung wird gleichzeitig mit einer Lösung von 1,4 g Diethylphosphit und 0,5 ml t-Butylperoctoat in 100 ml Chlorbenzol innerhalb 1 Stunde einer unter Stickstoff auf Rückfluss gehaltenen Vorlage von 200 ml t-Butanol zudosiert. Die Rückflusstemperatur steigt allmählich auf 85°C an, während das Polymer als weisser Brei ausfällt. Man lässt noch 4 Stunden auf Rückfluss, kühlt ab, saugt das Polymer ab, wäscht mit Ethylacetat nach und trocknet im Vakuum.

Ausbeute: 90 g Cl: gefunden <0,2%.

Bei Annahme einer zwitterionischen Struktur ist die Ausbeute quantitativ.

*Copolymer 24*

a) *4-Allylmorpholin*

Zur Lösung von 200 g Morpholin in 400 ml Isopropanol tropft man unter Rückfluss 60 g Allylbromid. Man hält noch 4 Stunden unter Rückfluss, engt am Rotationsverdampfer ein und nimmt mit 100 ml 20%iger NaOH auf. Man vervollständigt die Phasentrennung mit 20 g Kaliumcarbonat, trennt ab und destilliert nach Trocknung über KOH.

Ausbeute: 50 g.

Zur Überführung ins Hydrochlorid löst man in 200 ml t-Butanol und leitet HCl bis zur Gewichtszunahme von 20 g ein. Man fällt das Hydrochlorid mit Chlorbenzol und nimmt es ohne Trocknung in t-Butanol auf.

b) Zur Copolymerisation tropft man eine aus der Hälfte der unter a) hergestellten Allylmorpholiniumchloridlösung (= 0,2 Mol) sowie 14,4 g Acrylsäure und 42,6 g Acrylamid in 500 ml t-Butanol hergestellte Monomerlösung gleichzeitig mit der Lösung von 0,5 ml t-Butylperoctoat und 1,4 g Diethylphosphit einer unter Stickstoff auf Rückfluss gehaltenen Vorlage von 200 ml t-Butanol und 100 ml Chlorbenzol zu. Nach 5 Stunden Polymerisationsdauer kühlt man auf Raumtemperatur ab, saugt ab, wäscht mit Ethylacetat nach und trocknet im Vakuum.

Ausbeute: 60 g (67% der Theorie).

*Copolymer 25*

Man verfährt wie bei Copolymer 23, jedoch mit dem Unterschied, dass anstelle von 1,3-Bis-ethylamino-2-methylenpropan in Form des Hydrochlorids das Hydrochlorid

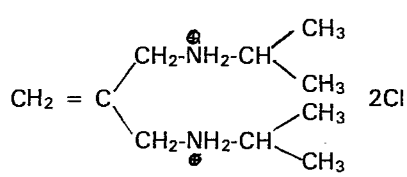

hergestellt aus der analog Beispiel 23 zugänglichen Base ($Kp_{14}$: 84-87°) eingesetzt wird.

Ausbeute: 86 g.

*Copolymer 26*

a) 1,3-Bis-methylamino-2-methylenpropan:

Man verfährt wie in Beispiel 23 a), jedoch mit dem Unterschied, dass anstelle von Ethylamin eine 37%ige Methylaminlösung eingesetzt wird.

Ausbeute: 60 g (54% der Theorie, Kp. 105 bis 110°C).

b) Zur Herstellung des Hydrochlorids verfährt man analog Beispiel 23 b).

c) Zur Copolymerisation verfährt man analog Beispiel 16.2, jedoch mit dem Unterschied, dass die Monomerlösung wie folgt zusammengesetzt ist:

46,15 g Acrylamid (0,65 Mol)
12,8 g Butylacrylat (0,1 Mol)
10,8 g Acrylsäure stabilisiert (0,15 Mol)

18,7 g Hydrochlorid aus b) (0,1 Mol).
Ausbeute: 84 g (95% der Theorie).
Analyse:
$Cl_{berechnet}$: 7,17%
$Cl_{gefunden}$: 7,05%

*Copolymer 27*

Unter Rühren in Stickstoffatmosphäre tropft man in eine auf Rückfluss gehaltene Vorlage von
100 ml t-Butanol gleichzeitig die Lösung von
1. 46,8 g Allylammoniumchlorid, 35,5 g Acrylamid und 0,5 g Diethylphosphit in
500 ml t-Butanol
und die Lösung von
2. 0,3 g Azoisobutyronitril in
50 ml Chlorbenzol zu.

Die Zulaufdauer beträgt 60 Minuten. Anschliessend hält man noch 3 stunden unter Rückfluss. Während der ersten 2 Stunden Nachrührzeit tropft man weitere 0,3 g Azoisobutyronitril in 50 ml chlorbenzol nach. Man kühlt auf 20°C, saugt ab, wäscht mit Ethylacetat und trocknet bei 60°C im Vakuum.

Ausbeute: 66 g (80% der Theorie).

Das Copolymer ist über den gesamten pH-Bereich wasserlöslich.

**Patentansprüche**

1. Verfahren zur Polymerisation von Allylammoniumsalzen, dadurch gekennzeichnet, dass man eine Verbindung der Formel

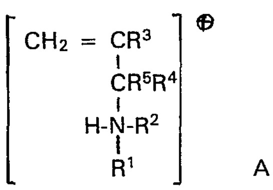 (I)

worin bedeutet:

$R^1$, $R^2$ gleich oder verschieden: Wasserstoff; einen aliphatischen, araliphatischen oder cycloaliphatischen Rest, der mit einem in der Polymerchemie üblichen Substituenten substituiert sein kann oder $R^1$ und $R^2$ zusammen den Rest zur Ergänzung eines 5-7gliedrigen Heterocyclus.

$R^3$-$R^5$ gleich oder verschieden: Wasserstoff; Alkyl, welches mit einem in der Polymerchemie üblichen Substituenten substituiert sein kann

a Anion

und/oder

$R^3$ den Rest $(-CR^5R^4-NR^1R^2H)^{+}A$

in Gegenwart einer Phosphorverbindung der Formel

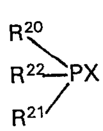 (II)

worin bedeuten

$R^{20}$, $R^{21}$ gleich oder verschieden: Wasserstoff; Alkyl; Aryl; OH; Alkoxy; Aralkyl; Aralkoxy; Dialkylamino; oder $R^{20}$ und $R^{21}$ die Gruppe $-O-R^{23}-O-$, worin $R^{23}$ ein Alkylrest mit nicht mehr als 6 C-Atomen ist,

$R^{22}$ H; eine Acylgruppe; Alkyl; Dialkylamino,

X einsames Elektronenpaar oder ein Sauerstoffatom, wobei X ein Elektronenpaar bedeutet, wenn keiner der Substituenten $R^{20}$-$R^{22}$ Wasserstoff bedeutet,

polymerisiert.

2. Verfahren nach Anspruch 1, dadurch gekennzeichnet, dass die Polymerisation zwischen 60 und 90°C durchgeführt wird.

3. Verfahren nach Anspruch 1, dadurch gekennzeichnet, dass das Phosphoratom in der Verbindung (II) in der Oxidationsstufe +3 vorliegt.

4. Verfahren nach Anspruch 1, dadurch gekennzeichnet, dass die Polymerisation unter Copolymerisation eines ethylenisch ungesättigten Comonomeren vom Acryltyp durchgeführt wird.

5. Verfahren nach anspruch 4, dadurch gekennzeichnet, dass 5 bis 30 Mol.-% der Monomeren Allylammoniumsalze sind.

6. Verfahren nach Anspruch 1, dadurch gekennzeichnet, dass bedeuten

$R^1$, $R^2$, $R^4$, $R^5$: H

$R^3$: H; $CH_2NH_2R^1$; $CH_3$

$R^{20}$ und $R^{21}$: H; Alkyl mit 1 bis 12 C-Atomen; Phenyl; OH; Alkoxy mit 1 bis 12 C-Atomen; Benzyl; Aralkoxy;

$R^{22}$: H; Acetyl, Pivaloyl, Butyryl, Benzoyl; Alkyl mit 1 bis 12 C-Atomen,

A: Cl

X: ein Sauerstoffatom.

7. Verfahren nach Anspruch 6, dadurch gekennzeichnet, dass die Verbindung (II) Phosphorige Säure oder ein Mono- oder Diester der Phosphorigen Säure ist.

8. Verfahren nach Anspruch 1, dadurch gekennzeichnet, dass die verbindung der Formel (I) ein Salz des Allylamins und dass die Verbindung gemäss Formel (II) wenigstens eine der folgenden Substanzen ist: Dibutylphosphit, Diethylphosphit, Phenylphosphinsäure, Phenylphosphinsäurebutylester, Unterphosphorige Säure.

9. Verfahren nach Anspruch 8, dadurch gekennzeichnet, dass als zusätzliches Comonomer Acrylamid und/oder Acrylsäure verwendet wird.

10. Polymere mit wiederkehrenden einheiten der Formel:

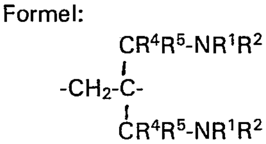 (III)

oder der entsprechenden Ammoniumsalze, wobei $R^1$-$R^5$ die in Anspruch 1 genannte Bedeutung haben.

**Claims**

1. Process for the polymerisation of allyl ammonium salts, characterised in that a compound of the formula

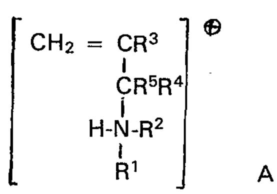 (I)

wherein

$R^1$ and $R^2$ are identical or different and denote: hydrogen; an aliphatic araliphatic or cycloaliphatic radical which can be substituted by a substituent which is customary in polymer chemistry or

$R^1$ and $R^2$ together denote the atoms required to complete a 5- to 7-membered heterocyclic group,

$R^3$-$R^5$ are identical or different and represent: hydrogen; alkyl which can be substituted by a substituent which is customary in polymer chemistry,

A denotes an anion

and/or

$R^3$ denotes the radical $(-CR^5R^4-NR^1R^2H)^+A$

is polimerised in the presence of a phosphorus compound of the Formula

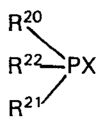

(II)

wherein

$R^{20}$ and $R^{21}$ are identical or different and denote: hydrogen; alkyl; aryl; OH; alkoxy; aralkyl; aralkoxy; dialkylamino; or

$R^{20}$ and $R^{21}$ denote the group $-O-R^{23}-O-$, wherein

$R^{23}$ is an alkyl radical with no more than 6 C atoms,

$R^{22}$ denotes H; an acyl group; alkyl; dialkylamino,

X denotes a single electron pair or an oxygen atom,

X representing an electron pair when none of the substituents $R^{20}$-$R^{22}$ denotes hydrogen.

2. Process according to claim 1, characterised in that the polymerisation is carried out at between 60 and 90°C.

3. Process according to claim 1, characterised in that the phosphorous atom in the compound (II) is present in the oxidation stage of +3.

4. Process according to claim 1, characterised in that the polymerisation is carried out with copolymerisation of an ethylenically unsaturated comonomer of the acryl type.

5. Process according to claim 4, characterised in that 5 to 30 mol% of the monomers are allyl ammonium salts.

6. Process according to claim 1, characterised in that

$R^1$, $R^2$, $R^4$ and $R^5$ denote H,

$R^3$ denotes H; $CH_2NH_2R^1$; $CH_3$

$R^{20}$ and $R^{21}$ denote H; alkyl with 1 to 12 C atoms; phenyl; OH; alkoxy with 1 to 12 C atoms; benzyl; aralkoxy;

$R^{22}$ denotes H; acetyl, pivaloyl, butyryl, benzoyl, alkyl with 1 to 12 C atoms,

A denotes Cl and

X denotes an oxygen atom.

7. Process according to claim 6, characterised in that the compound (II) is phosphorous acid or a monoester or diester of phosphorous acid.

8. Process according to claim 1, characterised in that the compound of the formula (I) is a salt of allyl amine and in that the compound according to formula (II) is at least one of the following substances: dibutyl phosphite, diethyl phosphite, phenyl phosphinic acid, phenyl phosphinic acid butyl ester or hypophosphorous acid.

9. Process according to claim 8, characterised in that acrylamide and/or acrylic acid is used as the additional comonomer.

10. Polymers containing recurring units of the formula:

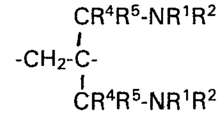

(III)

or of the corresponding ammonium salts, wherein

$R^1$-$R^5$ have the meaning given in claim 1.

**Revendications**

1. Procédé pour la polymérisation de sels d'allylammonium, caractérisé en ce que l'on polymérisé un composé de formule

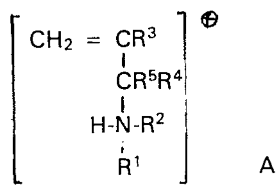

(I)

dans laquelle

$R^1$ et $R^2$ sont identiques ou différents et représentent chacun l'hydrogène ou un reste aliphatique, arylaliphatique ou cycloaliphatique, qui peut être substitué par un substituant habituel dans la chimie des polymères, ou bien $R^1$ et $R^2$ représentent ensemble le reste pour compléter un hétérocycle à 5-7 chaînons

$R^3$-$R^5$ sont identiques ou différents et représentent chacun l'hydrogène, un groupe alkyle qui peut être substitué par un substituant habituel dans la chimie des polymères

A représente un anion

et/ou

$R^3$ représente le reste $(-CR^5R^4-NR^1R^2H)^+A$

en présence d'un composé de phosphore de formule

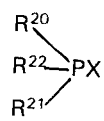

(II)

dans laquelle

$R^{20}$ et $R^{21}$ sont identiques ou différents et représentent chacun l'hydrogène ou un groupe alkyle, aryle, OH, alcoxy, arylalkyle, arylalcoxy, dialkylamino, ou bien $R^{20}$ et $R^{21}$ représentent le groupe $-O-R^{23}-O-$, dans lequel $R^{23}$ est un reste alkyle à au maximum de 6 atomes de carbone,

$R^{22}$ représente H, un groupe acyle, alkyle, dialkylamino,

X représente un doublet électronique isolé ou un atome d'oxygène, X étant un doublet électronique lorsque aucun des substituants $R^{20}$ à $R^{22}$ n'est l'hydrogène.

2. Procédé selon la revendication 1, caractérisé en ce que la polymérisation est effectuée entre 60 et 90°C.

3. Procédé selon la revendication 1, caractérisé

en ce que l'atome de phosphore dans le composé (II) est au degré d'oxydation +3.

4. Procédé selon la revendication 1, caractérisé en ce que la polymérisation est effectuée avec copolymérisation d'un comonomère à insaturation éthylénique du type acrylique.

5. Procédé selon la revendication 4, caractérisé en ce que 5 à 30 moles-% des monomères sont des sels d'allylammonium.

6. Procédé selon la revendication 1, caractérisé en ce que

$R^1$, $R^2$, $R^4$ et $R^5$ représentent H

$R^3$ représente H, $CH_2NH_2R^1$, $CH_3$

$R^{20}$ et $R^{21}$ représentent chacun H ou un groupe alkyle en $C_1$-$C_{12}$, phényle, OH, alcoxy en $C_1$-$C_{12}$, benzyle arylalcoxy,

$R^{22}$ représente H ou un groupe acétyle, pivaloyle, butyryle, benzoyle, alkyle an $C_1$-$C_{12}$

A représente Cl

X représente un atome d'oxygène.

7. Procédé selon la revendication 6, caractérisé en ce que le composé (II) est l'acide phosphoreux ou un mono- ou diester de l'acide phosphoreux.

8. Procédé selon la revendication 1, caractérisé en ce que le composé de formule (I) est un sel de l'allylamine et en ce que le composé selon la formule (II) est au moins une des substances suivantes: phosphite de dibutyle, phosphite de diéthyle, acide phénylphosphinique, phénylphosphinate de butyle, acide hypophosphoreux.

9. Procédé selon la revendication 8, caractérisé en ce que l'on utilise comme homonomère supplémentaire l'acrylamide et/ou l'acide acrylique.

10. Polymère à motifs récurrents de formule

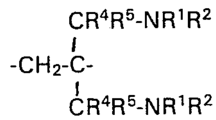

(III)

ou les sels d'ammonium correspondants, dans lesquels $R^1$ à $R^5$ ont la définition indiqué dans la revendication 1.